Europäisches Patentamt

European Patent Office

Office européen des brevets

(19)

(11) Publication number: **0 352 518**
**A2**

(12) **EUROPEAN PATENT APPLICATION**

(21) Application number: **89112324.2**

(22) Date of filing: **06.07.89**

(51) Int. Cl.⁴: **B29D 1/00**

(30) Priority: **25.07.88 JP 183564/88**
**25.07.88 JP 183565/88**

(43) Date of publication of application:
**31.01.90 Bulletin 90/05**

(84) Designated Contracting States:
**BE CH DE ES FR GB IT LI NL**

(71) Applicant: **TOKAI TRW & CO., LTD.**
**1203 Aza-Shimodamonaka Ushiyama-cho**
**Kasugai-shi Aichi-ken(JP)**

(72) Inventor: **Iwata, Masahito**
**120-2 Ogane-cho**
**Seto-shi Aichi-ken(JP)**

(74) Representative: **Witte, Alexander, Dr.-Ing. et al**
**Witte, Weller & Hilgenfeldt Patent- und**
**Rechtsanwälte Augustenstrasse 7**
**D-7000 Stuttgart 1(DE)**

(54) Method of manufacturing a single-piece valve sleeve.

(57) A method of manufacturing a single-piece valve sleeve, including the steps of plastic-working a workpiece (1) thereby to form in the workpiece (1) a blind bore and a plurality of grooves (2) in the surface of the bore, the grooves (2) extending lengthwise of the bore (3) and having one closed end at the bottom of the bore (3) and an open end at the mouth of the bore; plastic-working a portion of the workpiece (1) at the bottom of the bore (3) so as to form a through hole in the workpiece (1); and plastic-working an inner portion of the workpiece adjacent the mouth (6) of the bore (3) thereby to form an uplift portion (16) so as to close the open end of the grooves (2) wherein the inner portion of the workpiece is press-deformed with a punch and the uplift portion (16) is guided by a mandrel from opposite direction of the punch.

# FIG.10

# METHOD OF MANUFACTURING A SINGLE-PIECE VALVE SLEEVE

## INDUSTRIAL FIELD OF THE INVENTION

This invention relates to a method of manufacturing a single-piece valve sleeve for use in a power steering device or the like.

## PRIOR ART

As is well known, a valve sleeve is formed with a plurality of grooves (oil grooves) in the inner surface thereof so as to function in co-operation with a land portion of an input shaft, as a selector valve in the directional control of power steering.

In conventional two-piece or three-piece valve sleeves, after such grooves are formed, a ring is press-fitted into one or both ends of a valve sleeve body thereby to close both ends of the grooves in the inner surface of the valve sleeve by means of the ring or rings. For example, see Japanese Patent Publication No. 60-3893.

In addition to such two-piece or three-piece valve sleeves, a single-piece valve sleeve consisting of a valve sleeve body only is disclosed, for instance in Japanese Patent Laying-Open No. 54-132935 and 60-73175.

Japanese Patent Laying-Open No. 55-119564 discloses a single-piece valve sleeve in which grooves are preformed in a valve sleeve by broaching or by passing a similar cutting tool through the sleeve and thereafter an annular bead or beads is or are formed by extrusion so as to close an end or the ends of each groove.

However, those conventional valve sleeves normally have grooves formed by cutting. In the case of such grooves formed by cutting, it takes a few minutes to form one groove. Thus, it takes a long time to finish one valve sleeve.

In particular, in a single-piece valve sleeve, as disclosed in Japanese Patent Laying-Open No. 54-132935, the production cost is high because a complicated machine for cutting an inner surface of a workpiece must be used.

According to the conventional methods for manufacturing valve sleeves, the dimensional accuracy of valve sleeves largely depends upon the precision of cutting machines, the cutting performance of cutting tools, the precision of jigs, the inner surface grinding characteristics of the valve blanks and so on. As a result inaccurate valve sleeves are often produced.

According to a manufacturing method as shown in Japanese Patent Laying-Open No. 55-119564, plural grooves having their ends closed must be formed by both cutting and extruding so that the production cost is high. Also, it is extremely difficult to change a cutting operation to an extruding operation. Moreover, the beads produced by extrusion are often inaccurate, and accuracy in the size of the grooves is not sufficient.

Japanese Patent Laying-Open No. 60-73175 discloses a method of manufacturing a single-piece sleeve using a cylindrical sleeve blank having a peripheral portion at each end thicker than an intermediate portion thereof, the thick portions being deformed radially inwardly by a plastic-working method before the inner and outer surfaces of the cylindrical sleeve blank are machined. However, in such a prior manufacturing method, it is not easy to produce a cylindrical sleeve blank having different thickness at the ends and at the intermediate portion thereof, and the amount of excess material to be removed from the inner surface of the sleeve blank is large so that production costs become high. In addition, it is extremely difficult to improve productivity and accuracy.

U S Patent 4,768,268 discloses a method of manufacturing a single-piece valve sleeve, including the steps of plastic-working a workpiece thereby to form in the workpiece a blind bore and a plurality of grooves in the surface of the bore and extending lengthwise of the bore, plastic-working a portion of the workpiece at the bottom of the bore so as to form a through hole in the workpiece, and plastic-working an inner portion of the workpiece adjacent the mouth of the bore thereby to close one end of the grooves. By this method a single-piece type valve sleeve is produced.

However, in the last plastic-workding step, conventionally a punch is used and burrs or fins are apt to be produced at the free edge of a deformed portion. The free edge of the deformed portion corresponds to the opposite side facing the punch. Therefore, the grooves are often closed inaccurately.

On the other hand, the life of the punch is relatively short. In plastic-working, stress is concentrated to the edge portion of the punch, and the angle of the conventional punch is acute so that the punch will easily deteriorate in heavy use.

## SUMMARY OF THE INVENTION

The object of this invention is to provide, by obviating or mitigating the above stated defects of the prior art, a method of manufacturing a single-piece valve sleeve in which the production cost can be decreased, and productivity and accuracy can be improved.

This invention provides a method of manufacturing a single-piece valve sleeve, including the steps of:

plastic-working a workpiece thereby to form in the workpiece a blind bore and a plurality of grooves in the surface of the bore, the grooves extending lengthwise of the bore and having one closed end at the bottom of the bore and an open end at the mouth of the bore;

plastic-working a portion of the workpiece at the bottom of the bore so as to form a through hole in the workpiece; and

plastic-working an inner portion of the workpiece adjacent the mouth of the bore thereby to form an uplift portion so as to close the open end of the grooves wherein the inner portion of the workpiece is press-deformed with a punch and the uplift portion is guided by a mandrel from opposite direction of the punch.

Typically, a workpiece is first formed with a blind bore and a plurality of grooves in an inner surface of, and extending lengthwise of, the bore. It is preferable that the grooves are formed by a front or back drawing method. Thereafter, a portion of the workpiece at the bottom of the bore is removed by plastic-working and, preferably, by punching so as to form a through hole in the workpiece while preferably leaving the inner ends of the grooves closed. Further, an inner portion of the workpiece adjacent the mouth of the bore is plastic-worked to be press -deformed with a punch and a mandrel. As a result, an uplift portion is formed so that the ends of the grooves adjacent the mouth of the bore are closed. In this step, the uplift portion is guided by the mandrel from the opposite direction to the punch. After that, the inner surface of the workpiece is machined so that an accurate cylindrical through-hole is formed. Further, possibly the outer surface of the workpiece is machined as desired, e.g. some grooves or the like are additionally formed in the outer surface.

The above mentioned steps may be carried out in a cold or hot condition.

Before the blind bore and the grooves are formed, preferably, a first prepared opening is formed in the workpiece by plastic-working.

Also, before the blind bore and the grooves are formed, a second prepared opening is formed in the bottom portion of the first prepared opening by plastic-working. The second prepared opening has a smaller diameter than the first prepared opening. In this case, the blind bore and the grooves are formed in the workpiece at a bottom portion of the second prepared opening.

Alternatively, the second prepared opening can be formed after both the blind bore and the grooves are formed. In this case, the second prepared opening, or the second enlarged portion, is formed at the mouth of the blind bore by machining or plastic-working. Thereby a shoulder portion at the mouth of the blind bore is reduced.

When the shoulder portion is reduced by forming the second prepared opening (or the second enlarged portion), excess material is reduced, which is produced in the plastic-working step for closing the open ends of the grooves. The amount of excess material to be removed in the finishing step can be decreased. So, the productivity can be improved.

Preferably, the tool angle of the punch is a right angle or an obtuse angle. Therefore, the life of the punch is remarkably long. So, the cost of producing the single-piece valve sleeve can be decreased.

According to the embodiments of this invention, the uplift portion formed by the punch is guided by the mandrel. Therefore, the grooves are closed accurately without burrs or fins. In this way, accuracy in size of the grooves can be excellent, with a stabilized high quality.

BRIEF DESCRIPTION OF THE DRAWINGS

Fig 1 is a front view showing, with some parts cut away, a workpiece which is used in a method for manufacturing a single-piece valve sleeve according to this invention;

Fig 2 is a sectional view showing a workpiece formed with a first prepared opening by a plastic-working method;

Fig 3 is a sectional view showing a workpiece formed with first and second prepared openings;

Fig 4 is a sectional view showing a workpiece formed with a first prepared opening and a blind bore and a plurality of grooves by a plastic-working method;

Fig 5 is a sectional view showing a workpiece formed with first and second prepared openings and a blind bore and a plurality of grooves;

Fig 6 is an end view showing the partly formed workpiece of Fig 5;

Fig 7 is a sectional view showing a workpiece in which a portion at the bottom of the bore is punched so as to form a through-hole in the workpiece;

Fig 8 is a view, partly cut away, showing the workpiece in a plastic-working step with a punch and a mandrel;

Fig 9 is a view showing another embodiment of the plastic-working step in Fig 8;

Fig 10 is a sectional view showing a workpiece in which an inner portion of the workpiece adjacent the mouth of the original bore is pressed so as to be deformed;

Fig 11 is a sectional view showing another embodiment of the workpiece shown in Fig 10;

Figs 12 to 14 are enlarged views showing plastic-working steps whereby an inner portion of the workpiece adjacent the mouth of the original bore is deformed by a punch; and

Fig 15 is a sectional view showing a finished single-piece valve sleeve after the inner and outer surfaces of the workpiece have been machined.

EMBODIMENT

A single-piece valve sleeve is manufactured in a cold or hot condition as follows:

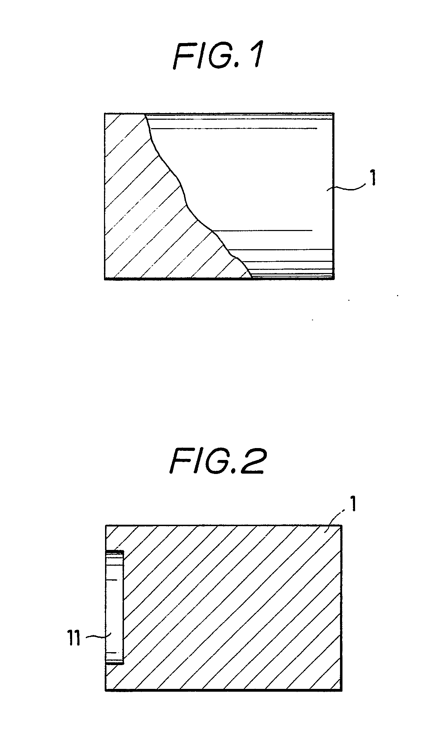

Fig 1 shows a workpiece 1 which has the same diameter over its entire length without any opening therein. Preferably, the workpiece 1 is produced by cutting a long cylindrical bar to a predetermined length.

The workpiece 1 is formed with a first prepared opening 11 by plastic-working as shown in Fig 2.

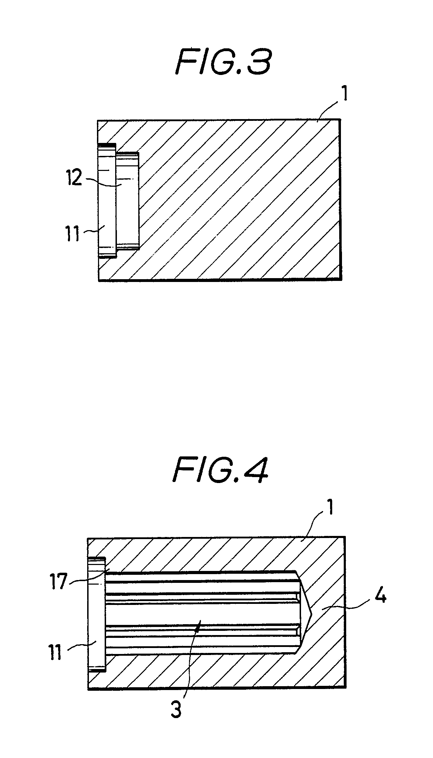

Next, a portion of the workpiece at the bottom of the first prepared opening 11 is plastic-worked so that a second prepared opening 12 is formed in the workpiece as shown in Fig 3. The second prepared opening has a smaller diameter than first opening 11.

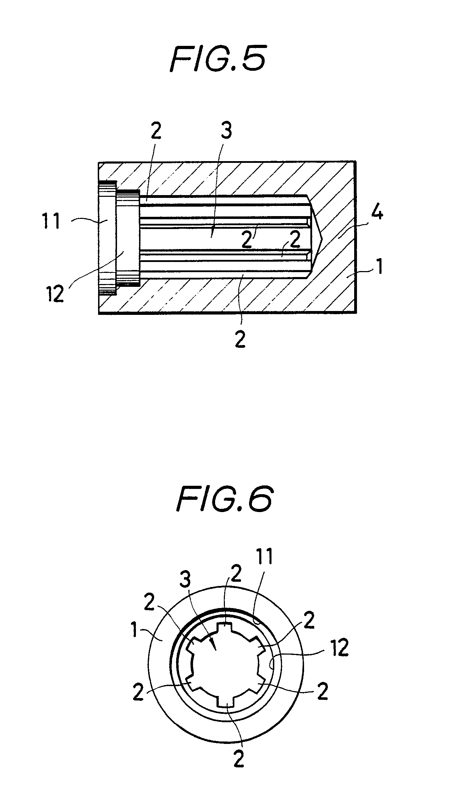

Then a portion of the workpiece at the bottom of the second prepared opening 12 is plastic-worked so that a blind bore 3 and a plurality of grooves 2 functioning as oil grooves are formed in the workpiece, by plastic-working as shown in Figs 5 and 6. The bore 3 and the grooves 2 are preferably formed by a back drawing method although they can be formed by a conventional front drawing method. The grooves 2 are orientated in the longitudinal direction of the bore 3, that is, the longitudinal direction of the workpiece 1 and are distributed equi-angularly in the bore.

Alternatively, the second prepared opening 12 can be formed after the bore 3 and the grooves 2 are formed. In this case, the blind bore 3 and the grooves 2 are formed in the workpiece shown in Fig 2 at the bottom portion of the first prepared opening 11. Therefore, the workpiece has a shoulder portion 17 at the open end of the blind bore 3 as shown in Fig 4. Then, the second prepared opening 12, or the second enlarged portion, is formed by cutting or by plastic-working as shown in Fig 5 whereby the shoulder portion 17 is removed. The shoulder portion 17 may be machined by taper-cutting instead of cylindrical-cutting.

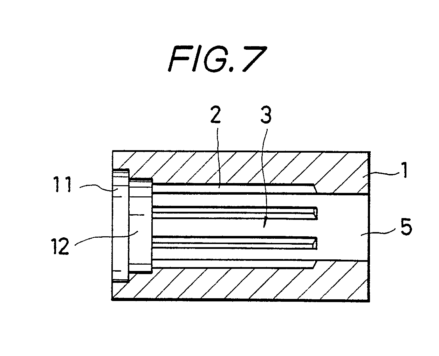

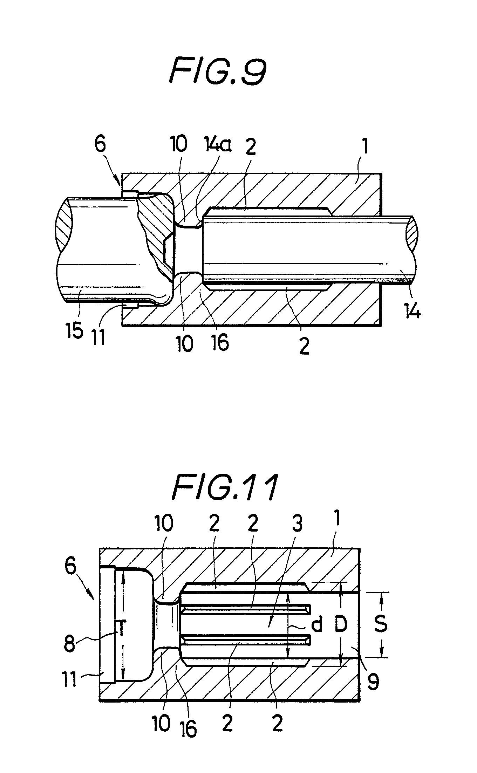

Next, a portion 4 (see Figs 4, 5) of the workpiece at the bottom of the bore 3 is plastic-worked, preferably, by punching thereof, thereby to form with the bore 3 a through-hole 5, as shown in Fig 7. As shown in Figs 10, 11, the inner diameter S of the punched portion of the hole 5 is substantially equal to the diameter d of the bore 3 between the grooves 2, 2 and may be slightly smaller. Accordingly, the right hand ends of the groove 2 in Fig 7 which are formed closed remain closed.

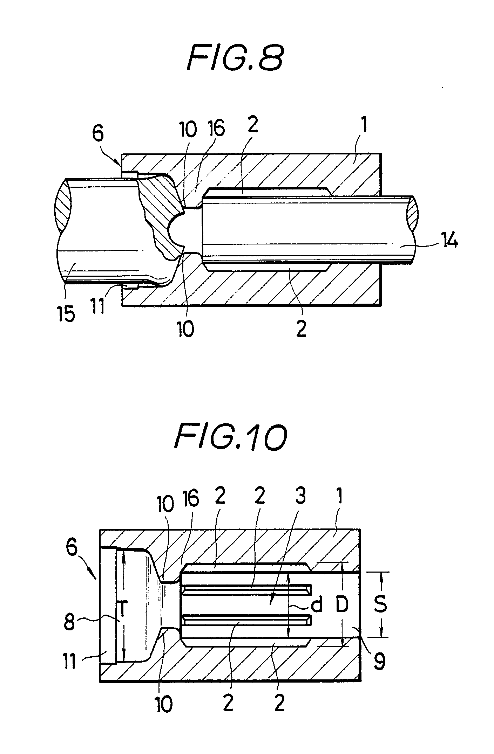

As shown in Figs 8, 9, 12-14, an inner portion of the workpiece 1 is further plastic-worked with a punch through the open end 6 of the bore 3. The inner diameter T of the inner wall 8 of the open end 6 is made larger than the diameter D of the bore 3. In this way, the other end of the grooves 2 are closed.

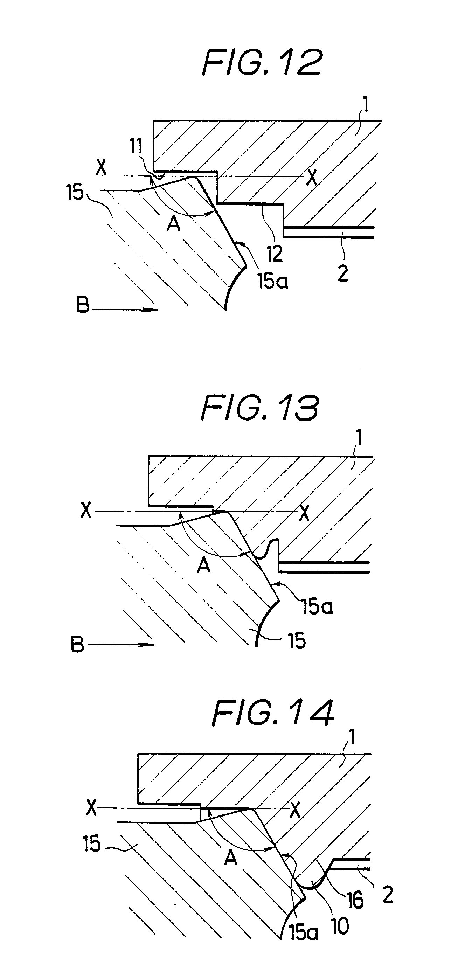

The punch 15 is inserted into the bore 11 as shown with the arrow B (see Figs 12-14). The inner portion of the bore 3 is press-deformed so that an uplift portion 16 is produced. Tool angle A of punch 15 is an obtuse angle in Figs 8, 12-14. The tool angle means an angle between the face 15a of the punch 15 and the dashed line X-X which corresponds to the punch inserting direction B. The tool angle of the punch 15 may be right angle as shown in Fig 9.

As shown in Figs 8 and 9, a mandrel 14 of a core bar cooperates with the punch 15. The mandrel 14 is inserted into the bore 3 in the opposite direction to the punch 15. The uplift portion 16 is guided by the mandrel 14 so that the grooves 2 can be closed accurately without fins or burrs. For instance, the mandrel 14 is cylindrical shape. The guide face 14a of the mandrel 14 may be cone shape (not shown). In this case, the uplift portion is deformed into the cone shape corresponding to the guide face of the mandrel.

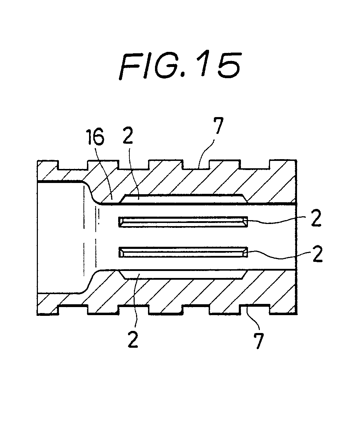

Finally, as shown in Fig 15, the inner and outer surfaces of the workpiece 1 are machined, if desired, thereby to produce a finished single-piece valve sleeve. For example, grooves 7 are additionally formed in the outer surface of the workpiece 1. Also, the inner walls 8, 9 and excess material 10 of the workpiece 1 shown in Figs 10, 11 are machined to a cylindrical form. The excess material 10 is also removed.

Although the invention has been described and exemplified by way of specific embodiments, it is not intended that it be limited thereto. As will be apparent to those skilled in the art, numerous modifications and variations of these embodiments can be made.

Claims

1. A method of manufacturing a single-piece valve sleeve, including the steps of:
plastic-working a workpiece (1) thereby to form in the workpiece (1) a blind bore (3) and a plurality of grooves (2) in the surface of the bore (3), the grooves (2) extending lengthwise of the bore (3) and having one closed end at the bottom of the bore (3) and an open end at the mouth of the bore (3);

plastic-working a portion (4) of the workpiece (1) at the bottom of the bore (3) so as to form a through hole (5) in the workpiece (1); and

plastic-working an inner portion of the workpiece adjacent the mouth of the bore (3) thereby to form an uplift portion (16) so as to close the open end of the grooves (2) wherein the inner portion of the workpiece (1) is press-deformed with a punch (15) and the uplift portion (16) is guided by a mandrel (14) from opposite direction of the punch (15).

2. A method of manufacturing a single-piece valve sleeve, including the steps of:

plastic-working a workpiece (1) thereby to form a first prepared opening (11);

plastic-working a portion of the workpiece (1) at the bottom of the first prepared opening (11) thereby to form in the workpiece a blind bore (3) and a plurality of grooves (2) in the surface of the bore (3), the grooves (2) extending lengthwise of the bore (3) and having one closed end at the bottom of the bore (3) and an open end at the mouth of the bore (3), the bore (3) having a shoulder portion (17) at the mouth thereof;

plastic-working a portion (4) of the workpiece (1) at the bottom of the bore (3) so as to form a through hole (5) in the workpiece (1); and

plastic-working an inner portion of the workpiece adjacent the mouth of the bore (3) thereby to form an uplift portion (16) so as to close the open end of the grooves (2) wherein the inner portion of the workpiece (1) is press-deformed with a punch (15) and the uplift portion (16) is guided by a mandrel (14) from the opposite direction to the punch (15).

3. A method of manufacturing a single-piece type valve sleeve, including the steps of:

plastic-working a workpiece (1) thereby to form a first prepared opening (11);

plastic-working a portion of the workpiece (1) at the bottom of the first prepared opening (11) thereby to form a second prepared opening (12), the second prepared opening (12) having smaller diameter than the first prepared opening (11);

plastic-working a portion of the workpiece (1) at the bottom of the second prepared opening (12) thereby to form in the workpiece a blind bore (3) and a plurality of grooves (2) in the surface of the bore (3), the grooves (2) extending lengthwise of the bore (3) and having one closed end at the bottom of the bore (3) and an open end at the mouth of the bore;

plastic-working a portion (4) of the workpiece (1) at the bottom of the bore (3) so as to form a through-hole (5) in the workpiece (1); and

plastic-working an inner portion of the workpiece (1) adjacent the mouth of the bore (3) thereby to form an uplift portion (16) so as to close the open end of the grooves (2) wherein the inner portion of the workpiece (1) is press-deformed with a punch (15) and the uplift portion (16) is guided by a mandrel (14) from the opposite direction to the punch (15).

4. A method as claimed in claim 2, wherein the plastic working step further comprises machining an inner portion of the workpiece (1) adjacent the mouth of the bore (3) thereby to remove the shoulder portion (17).

5. A method as claimed in any preceding claim, wherein the tool angle of the punch (15) is an obtuse angle.

6. A method as claimed in any of claims 1 to 4, wherein the tool angle of the punch (15) is a right angle.

7. A method as claimed in any of claims 1 to 6, wherein the grooves (2) are formed by a back drawing method.

8. A method as claimed in any of claims 1 to 6, wherein the grooves (2) are formed by a front drawing method.

9. A method as claimed in any of claims 1 to 8, further including machining the workpiece (1) as desired after performing said plastic working steps.

10. A method as claimed in any of claims 1 to 9, wherein the through-hole (5) is formed by punching the portion (4) of the workpiece (1) at the bottom of the bore (3).

11. A method as claimed in any of claims 1 to 10, wherein the workpiece (1) is cold formed throughout.

12. A method as claimed in any of claims 1 to 10, wherein the workpiece (1) is hot formed throughout.

## FIG.1

1

## FIG.2

1

11

## FIG.3

## FIG.4

# FIG.5

# FIG.6

## FIG.7

## FIG.8

## FIG.10

## FIG.9

## FIG.11

## FIG.12

## FIG.13

## FIG.14

# FIG.15